# EUROPEAN PATENT SPECIFICATION

(11) **EP 3 854 850 B1**
(45) Date of publication and mention of the grant of the patent: **11.03.2026**
(21) Application number: 19862974.3
(22) Date of filing: 19.09.2019
(51) Int. Cl.: C08G 63/688, C08G 63/183, C08G 63/199, C08G 63/20, C08J 5/18, C08K 3/36, B32B 15/09, B32B 15/18, B32B 27/36, B32B 27/20

(54) **LAMINATED IRON USED FOR FOOD PACKAGING AND HAVING DURABLE AND HIGH SURFACE TENSION FORCE, AND PREPARATION METHOD**
LAMINIERTES EISEN FÜR LEBENSMITTELVERPACKUNGEN MIT DAUERHAFTER UND HOHER OBERFLÄCHENSPANNUNGSKRAFT UND VERFAHREN ZUR HERSTELLUNG
FER STRATIFIÉ UTILISÉ POUR L'EMBALLAGE ALIMENTAIRE ET AYANT UNE FORCE DE TENSION DE SURFACE DURABLE ET ÉLEVÉE, ET PROCÉDÉ DE PRÉPARATION

(30) Priority: 19.09.2018 CN 201811090601
(43) Date of publication of application: 28.07.2021
(73) Proprietor: BAOSHAN IRON & STEEL CO., LTD., Shanghai 201900 (CN)
(72) Inventor: XIE, Long, Shanghai 201900 (CN); WANG, Zhangwei, Shanghai 201900 (CN); NI, Hua, Shanghai 201900 (CN)
(74) Representative: Kuhnen & Wacker Patent- und Rechtsanwaltsbüro PartG mbB
(86) International application number: PCT/CN2019/106617
(87) International publication number: WO 2020/057587

(56) References cited:
- EP-B1- 1 262 523
- CN-A- 1 580 092
- CN-A- 103 665 352
- CN-A- 105 077 898
- CN-A- 105 985 612
- JP-A- 2013 194 144
- JP-A- S56 110 722

## Description

### Technical Field

The present disclosure relates to the field of film-laminated metal plates for metal packaging of food, and more particularly to a film-laminated steel having a long-lasting high surface tension for food packaging and a method of manufacturing the same.

### Background Art

In the traditional industry of metal packaging containers, a thermosetting coating is usually applied to the surface of a metal material for making a can/lid, and a layer of thermosetting coating film is formed on the surface of the metal material by volatilization of the organic solvent to protect the metal from corrosion by the content. As people are increasingly demanding on living surroundings and food safety, this kind of thermosetting coatings that pollute environment and risk food safety have difficulty in satisfying the increasingly strict requirements of packaging containers.

In recent years, by compounding a biaxially oriented thermoplastic polyester film (BOPET) to the surface of a steel plate by hot melt lamination, the environmental pollution problem caused by the thermosetting coating has been solved effectively, and the risk in food safety caused by the traditional thermosetting coating is eliminated. The emergence of such film-laminated metal materials has innovated food and beverage packaging materials.

The BOPET film itself has excellent properties. However, the PET molecular chain itself is rigid, and the heat setting during the production process renders its crystallinity high. As a result, its melting point is relatively high. Hence, it has high difficulty in bonding to a metal surface. If the problem of the high crystallinity of the BOPET film and its difficulty in bonding to the metal surface can be solved, it will be extremely conducive to reducing the amount of the material to be sprayed on the packaging and reducing the weight, and will help simplify the process of the composite applications of steel plates. In recent years, polyester films modified accordingly (CN 102432984 A, US 20170152075 A1) have been reported successively in this field. These films may be applied to the field of film-laminated metal materials. The present applicant also reported a polyester film having a long-lasting high surface tension and prepared in a way with no additive (CN 105985612 A).

When film-laminated steel is used for a food or beverage packaging container, it is necessary to print exquisite patterns, trademarks, words and the like on the surface of the film-laminated steel, film-laminated can/lid by various printing processes. Currently, a printable layer is often introduced to the skin layer of a film by coating to improve the wettability of an ink (CN 106957616 A), or the surface tension of a printing substrate is increased by flame treatment (CN 201680033425 X) or other methods to improve the wetting and spreading ability of an ink on its surface, thereby improving its printability. As such, downstream users have to add additional investment in surface treatment equipment and related manpower.

Further polyester compositions and preparation methods for producing the same according to prior art are disclosed in CN 105985612 A, JP 2013194144 A, EP 1262523 B1 and CN 103665352 A.

### Summary

In order to solve this technical problem, the present disclosure provides a film-laminated steel, wherein the film-laminated steel is obtained by thermal lamination of a polyester film having a long-lasting high surface tension on a steel plate, and has excellent printability. Hence, surface treatments such as flame treatment and corona treatment before printing the film-laminated steel can be dispensed with for downstream users, and the investment of the downstream users in equipment for surface treatment of the film-laminated steel and related manpower can be reduced. The film-laminated steel provided by the present disclosure can be used for metal containers for medium-end to high-end food and beverage packaging, and meet the requirements of containers used for packaging food, beverage, etc.

In order to achieve the above object, the following technical solution is adopted according to the present disclosure.

According to one aspect of the present disclosure, there is provided a polyester film having a long-lasting high surface tension for food packaging, wherein the polyester film is formed by copolymerization of terephthalic acid, isophthalic acid, ethylene glycol and a fourth component, followed by biaxial stretching, wherein a feeding molar ratio is: terephthalic acid : ethylene glycol : isophthalic acid : the fourth component = (135-165) : (148-194) : (11-15) : (0.01-12), wherein the fourth component is one or more 5-sulfonate-isophthalic acid salts and optionally one or more selected from the group consisting of 1,4-cyclohexanedimethanol, neopentyl glycol, and trimellitic acid, wherein 800-2000 ppm, preferably 1000-1500 ppm, more preferably 1200 ppm by mass of SiO₂ is added to the polyester by *in-situ* polymerization.

In the polyester film having a long-lasting high surface tension for food packaging according to one aspect of the present disclosure, the 5-sulfonate-isophthalic acid salt is sodium 5-sulfonate-isophthalic acid, potassium 5-sulfonate-isophthalic acid or lithium 5-sulfonate-isophthalic acid.

In the polyester film having a long-lasting high surface tension for food packaging according to one aspect of the present disclosure, the polyester film is formed by copolymerization of terephthalic acid, isophthalic acid, ethylene glycol, a 5-sulfonate-isophthalic acid salt, 1,4-cyclohexanedimethanol and neopentyl glycol, followed by biaxial stretching, wherein a feeding molar ratio is terephthalic acid : ethylene glycol : isophthalic acid : 5-sulfonate-isophthalic acid salt : 1,4-cyclohexanedimethanol : neopentyl glycol = (135-165) : (148-194) : (11-15) : (0.01-5) : (0.01-3.5 ) : (0.5-3.5).

In the polyester film having a long-lasting high surface tension for food packaging according to one aspect of the present disclosure, the polyester film has a surface tension ≥0.045 N/m (45 dynes/cm).

In the polyester film having a long-lasting high surface tension for food packaging according to one aspect of the present disclosure, polyester films having different colors are prepared by adding different pigments and fillers.

According to another aspect of the present disclosure, there is provided a film-laminated steel, wherein the film-laminated steel comprises a steel plate and the abovementioned polyester film having a long-lasting high surface tension for food packaging laminated on the steel plate by thermal lamination, wherein the film-laminated steel has excellent printability.

In the film-laminated steel according to another aspect of the present disclosure, the steel plate is selected from the group consisting of a chromium-plated steel plate, a tin-plated steel plate, a low-tin steel plate, a galvanized steel plate, a cold-rolled steel plate, and a stainless steel plate.

According to still another aspect of the present disclosure, there is provided a metal container for medium-end to high-end food or beverage packaging, wherein the metal container is made of the film-laminated steel described above.

According to yet another aspect of the present disclosure, there is provided a method of preparing a polyester film having a long-lasting high surface tension for food packaging, wherein the method comprises the following steps:
(1) Preparation of a chemically modified polyester:
   Adding terephthalic acid, isophthalic acid, ethylene glycol, and a fourth component into a reactor at a feeding molar ratio of terephthalic acid : ethylene glycol : isophthalic acid : the fourth component = (135-165) : (148-194) : (11-15) : (0.01-12), wherein the fourth component is one or more 5-sulfonate-isophthalic acid salts and optionally one or more selected from the group consisting of 1,4-cyclohexanedimethanol, neopentyl glycol, and trimellitic acid; adding a catalyst; heating under stirring with N₂ as a protective gas to a temperature being controlled at 175-260°C to allow for copolymerization for a period of time of 1-3 h; releasing a pressure to ambient pressure; then further heating and depressurizing with the temperature in the reactor being increased to 240-310°C, and the pressure being reduced to 50-100Pa to start vacuum polycondensation; continuing the vacuum polycondensation for a period of time of 1.6-2.3 h to obtain a polyester melt; cooling and pelletizing the polyester melt to obtain a chemically modified polyester, wherein 1200 ppm by mass of SiO₂ is added to the chemically modified polyester by *in-situ* polymerization;
(2) Film preparation process:
   Drying the chemically modified polyester obtained in step (1) on a fluidized bed; extruding the dried chemically modified polyester through a twin-screw extruder to obtain a cast sheet; stretching the cast sheet first longitudinally, then transversely to obtain a film; heat setting the film at a temperature of 150-230°C for a period of time of 6-14 s; and finally cooling and winding the film to obtain a biaxially stretched polyester film.

In the method of preparing a polyester film having a long-lasting high surface tension for food packaging according to yet another aspect of the present disclosure, the catalyst is at least one selected from the group consisting of antimony trioxide, antimony acetate, poly(antimony ethylene glycoxide), and titanates.

In the method of preparing a polyester film having a long-lasting high surface tension for food packaging according to yet another aspect of the present disclosure, the catalyst has a mass fraction of 60-300 ppm, based on an amount of the polyester produced.

In the method of preparing a polyester film having a long-lasting high surface tension for food packaging according to yet another aspect of the present disclosure, in step (2), a temperature of each section of a screw of the twin-screw extruder is 250-270°C; a die temperature is 270-285°C; a rotational speed of the screw of the extruder is 45-50 r/min; and the cast sheet has a thickness of 0.15-0.25 mm.

In the method of preparing a polyester film having a long-lasting high surface tension for food packaging according to yet another aspect of the present disclosure, in step (2), the cast sheet is first stretched longitudinally at a stretching temperature of 70-80°C and a stretching ratio of 3-4, and then stretched transversely, before heat setting, at a stretching temperature of 95-105°C and a stretching ratio of 2.5-3.5.

### Detailed Description

The present disclosure provides a modified polyester, the monomers of which are terephthalic acid, isophthalic acid, ethylene glycol and a fourth component, wherein the molar ratio of the terephthalic acid, ethylene glycol, isophthalic acid and the fourth component in the modified polyester is A:B:C:D; wherein A is 135-165, preferably 140-160; B is 148-194, preferably 155-194, more preferably 160-192; C is 11-15, preferably 12-15; D is 0.01-12, preferably 3-12; wherein the fourth component is one or more 5-sulfonate-isophthalic acid salts and optionally one or more selected from the group consisting of 1,4-cyclohexanedimethanol, neopentyl glycol and trimellitic acid, and wherein the modified polyester comprises 800-2000 ppm, preferably 1000-1500 ppm, more preferably 1200 ppm by mass of SiO₂. The SiO₂ is added to the modified polyester by *in-situ* polymerization. The term "added by *in-situ* polymerization" as used herein refers to mixing SiO₂ with the monomers for synthesizing the modified polyester, and then polymerizing to produce the modified polyester according to the present disclosure.

In the present disclosure, the 5-sulfonate-isophthalic acid salt is an alkali metal salt of 5-sulfonate-isophthalic acid, such as sodium 5-sulfonate-isophthalic acid, potassium 5-sulfonate-isophthalic acid or lithium 5-sulfonate-isophthalic acid. One or more 5-sulfonate-isophthalic acid salts is used. Its molar ratio value may be in the range of 0.01-5, such as 0.5-5 or 1-4. When 1,4-cyclohexanedimethanol is used, its molar ratio value may be in the range of 0.01-3.5, such as 0.05-3.5 or 0.5-2. When neopentyl glycol is used, its molar ratio value may be in the range of 0.5-3.5, such as 1-3.5. When trimellitic acid is used, its molar ratio value may be in the range of 0.5-5, such as 0.5-4.

In some embodiments, the monomers used to form the modified polyester of the present disclosure are terephthalic acid, ethylene glycol, isophthalic acid, a 5-sulfonate-isophthalic acid salt, 1,4-cyclohexanedimethanol, neopentyl glycol and optional trimellitic acid. In these embodiments, preferably, the molar ratio of these monomers is (135-165) : (148-194) : (11-15) : (0.01-5) : (0.01-3.5) : (0.5-3.5 ) : (0-5). In preferred embodiments, the molar ratio of these monomers is (135-165) : (160-192) : (11-15) : (0.01-5) : (0.01-3.5) : (1-3.5 ) : (0-4).

In some preferred embodiments, the modified polyester of the present disclosure is formed by copolymerization of terephthalic acid, isophthalic acid, ethylene glycol, a 5-sulfonate-isophthalic acid salt, 1,4-cyclohexanedimethanol and neopentyl glycol, and 1000-1500ppm SiO₂ is added by *in-situ* polymerization, wherein the molar ratio of the monomers is terephthalic acid : ethylene glycol : isophthalic acid: 5-sulfonate-isophthalic acid salt : 1,4-cyclohexanedimethanol : neopentyl glycol = (135-165) : (148-194) : (11-15) : (0.01-5): (0.01-3.5) : (0.5-3.5), preferably (135-165) : (160-192) : (11-15) : (0.01-5) : (0.01-3.5) : (1-3.5).

The preparation of the modified polyester of the present disclosure comprises feeding the raw materials described herein into the reactor according to the feeding molar ratio of terephthalic acid : ethylene glycol : isophthalic acid : the fourth component = (135-165) : (148-194) : (11-15) : (0.01-12), and allowing them to react in the presence of a catalyst under the protection of an inert gas such as nitrogen. At the time of feeding, 800-2000 ppm by mass of SiO₂ is added at the same time, wherein SiO₂ is added to the modified polyester of the present disclosure by *in-situ* polymerization. The reaction temperature may be in the range of 175-260°C, and the copolymerization time may be controlled in the range of 1-3 hours. Subsequently, the pressure in the reactor is released to ambient pressure, and then the temperature is further increased and the pressure is further reduced. Particularly, the temperature in the reactor is increased to 240-310°C, and the pressure is reduced to 50-120Pa, so as to start vacuum polycondensation. The vacuum polycondensation time may be controlled in the range of 1.6-2.3 hours to obtain a polyester melt which is then cooled to obtain the chemically modified polyester of the present disclosure. The modified polyester may be pelletized. In some embodiments, the method further comprises a drying step, such as drying on a fluidized bed for 3-6 hours, wherein the drying temperature may be 120-160°C.

Preferably, the copolymerization temperature may be controlled in the range of 175-200°C, and the copolymerization time may be controlled in the range of 1.2-2.2 hours. At the beginning of the copolymerization reaction, the pressure in the reactor may be controlled in the range of 0.08-0.2 MPa, preferably in the range of 0.05-0.12 MPa. In the vacuum polycondensation reaction, the reaction temperature may be controlled in the range of 260-300°C, preferably in the range of 265-285°C; the reaction time may be controlled in the range of 1.6-2.0 hours; and the pressure may be controlled in the range of from 80 to 120 Pa, preferably to about 100 Pa.

In the present disclosure, the catalyst may be at least one selected from the group consisting of antimony-based catalysts and titanate-based catalysts. The antimony-based catalysts include, but are not limited to, antimony trioxide, antimony acetate, and poly(antimony ethylene glycoxide). The titanate catalysts include, but are not limited to, tetrabutyl titanate, isopropyl titanate, tetramethyl titanate, tetraethyl titanate, and tetrapropyl titanate. Any one or more of these catalysts may be used. Generally, based on the mass of the modified polyester produced, the catalyst is added in an amount of 60-300 ppm by mass, such as 60-280 ppm. The antimony-based catalyst is usually added in an amount of 80-280 ppm by mass, such as 80-280 ppm; and the titanate-based catalyst is usually added in an amount of 200-280 ppm by mass, such as 200-260 ppm. When these two types of catalysts are added together, the total amount added is usually in the range of 60-300 ppm by mass.

The modified polyester of the present disclosure may be used to prepare a polyester film having a long-lasting high surface tension for food packaging. Preferably, the surface tension of the polyester film is ≥0.045N/m (45 dynes/cm).

Therefore, in some embodiments of the present disclosure, there is provided a polyester film which is prepared from the modified polyester according to any embodiment of the present disclosure. In some embodiments, the surface tension of the polyester film is ≥0.045N/m (45 dynes/cm).

The polyester film of the present disclosure may be prepared as follows: the modified polyester of the present disclosure is extruded into a cast sheet through a twin-screw extruder, then biaxially stretched, and finally heat set and cooled to obtain the polyester film of the present disclosure. Preferably, the temperature of each section of the extruder screw is 250-270°C; the die temperature is 270-285°C; the rotational speed of the extruder screw is 45-50 r/min; and the thickness of the cast sheet is 0.15-0.25 mm. In the biaxial stretching, preferably, the cast sheet is first stretched longitudinally at a stretching temperature of 70-80°C and a stretching ratio of 3-4, and then stretched transversely at a stretching temperature of 95-105°C and a stretching ratio of 2.5-3.5. In the heat setting, preferably, the heat setting temperature is 150-230°C, and the time is 6-14s.

Polyester films in different colors may be prepared by adding different pigments and fillers.

The modified polyester or polyester film of the present disclosure may be used to prepare a film-laminated steel. Therefore, the present disclosure provides a film-laminated steel comprising a steel plate and the modified polyester or polyester film according to any embodiment of the present disclosure. The polyester film of the present disclosure can be laminated on the steel plate by thermal lamination. The film-laminated steel of the present disclosure has excellent printability. In the present disclosure, the steel plate in the film-laminated steel may be selected from the group consisting of a chromium-plated steel plate, a tin-plated steel plate, a low-tin steel plate (having a tin coating weight of ≤1.1 g/m²), a galvanized steel plate, a cold-rolled steel plate, and a stainless steel plate.

The film-laminated steel of the present disclosure can be used to prepare metal containers for medium-end to high-end food and beverage packaging. Therefore, the present disclosure also provides a metal container which is made of the film-laminated steel of the present disclosure.

Compared with the prior art, the present disclosure shows the following beneficial technical effects:
The present disclosure provides a film-laminated steel having excellent printability and a method of preparing the same. The film-laminated steel is prepared by direct thermal lamination of a polyester film having a long-lasting high surface tension on a steel plate. The polyester film is prepared by a biaxial stretching process with common polyethylene terephthalate (PET) as a master batch which is modified by designed chemical modification of molecular chains and an embedding means. The mechanism of action is to introduce a new functional group to destroy the rigid structure of common polyethylene terephthalate to reduce its crystallinity, so that direct thermal laminatability can be obtained. At the same time, hydrophilic and alkali-soluble groups are introduced to greatly increase the surface tension of the polyester film (≥0.045N/m (45 dynes/cm)) thereby providing long-lasting constancy. The film-laminated steel can guarantee a long-lasting high surface tension with no need of surface treatment, and the wetting and spreading ability of an ink on the surface of the film-laminated steel can be improved greatly. Good ink printability can be achieved without surface treatment such as flame treatment and corona treatment.

The film-laminated steel of the present disclosure has balanced characteristics of no high temperature deformation, good barrier property, good corrosion resistance, no pollution to contents, no blocking, etc., and can be widely used for various beverage and food packaging containers. At the same time, the film-laminated steel of the present disclosure may have excellent printability without surface treatment such as corona or flame treatment.

Due to the addition of SiO₂ to the polymer by *in-situ* polymerization, the crystallization properties of the polyester film are improved uniformly on the whole. By substituting the traditional way of adding SiO₂ in the form of master batch, addition of a high melting point resin to the film is avoided. The above two points have improved the overall performance of the polyester film significantly, and the complex processing endurance and corrosion resistance of the film-laminated steel comprising the film of the present disclosure have been improved notably.

Due to the addition of 800-2000 ppm by mass of SiO₂ by *in-situ* polymerization, the polyester film and the film-laminated steel of the present disclosure have the following three characteristics at the same time: the polyester film has an attribute of high-level food safety, endurance in deep drawing processing and complex deformation processing, and excellent corrosion resistance, widely useful in the medium-end to high-end metal packaging industry.

In the following detailed description, the objectives, features, and advantages of the present disclosure will become clearer and more apparent with reference to the non-limiting examples. The content is sufficient to enable those skilled in the art to appreciate and implement the present disclosure.

### Example 1

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 135 : 160 : 12, and then a catalyst, 1,4-cyclohexanedimethanol, neopentyl glycol and dimethyl isophthalate-5-sodium sulfonate were added. The catalyst was antimony trioxide (300 ppm by mass). The molar ratio value of 1,4-cyclohexanedimethanol was 3.5; the molar ratio value of neopentyl glycol was 1; and the molar ratio value of dimethyl isophthalate-5-sodium sulfonate was 0.01. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

Preparation of a modified polyester film: The master batch thus obtained was dried on a fluidized bed at a drying temperature of 120-160°C for 4 hours, and extruded through a twin-screw extruder to obtain a cast sheet. The temperature of each section of the extruder screw was 250-270°C, the die temperature was 270-285°C, the rotational speed of the extruder screw was 45-50 r/min, and the thickness of the cast sheet was 0.15-0.25 mm. The cast sheet was first stretched longitudinally at a stretching temperature of 70-80°C and a stretching ratio of 3-4; then stretched transversely at a stretching temperature of 95-105°C and a stretching ratio of 2.5-3.5; and subsequently heat set at a heat setting temperature of 150-230°C for 6-14s to obtain a film. Finally, the film was cooled, wound, and slit for use.

Preparation of a film-laminated steel: the polyester film prepared by the biaxial stretching process was thermally bonded to the surface of a 0.10-0.50 mm thin steel plate at a pressure of 2-10 kg and a temperature of 180-260°C to obtain a film-laminated steel.

### Example 2

Preparation of a modified polyester: The experiment was carried out in a 10L reactor. Terephthalic acid, isophthalic acid, and ethylene glycol were added to the reactor at a molar ratio of terephthalic acid : ethylene glycol : isophthalic acid = 150 : 180 : 14, and then a catalyst and sodium 5-sulfonate-isophthalic acid were added. The catalyst was a mixture of antimony trioxide (40 ppm by mass) and a titanate (tetrabutyl titanate, 260 ppm by mass). The molar ratio value of sodium 5-sulfonate-isophthalic acid was 3.8. Replacement with N₂ was performed, and heating under stirring at a gas pressure of 0.1 MPa was conducted. The temperature was controlled at 175°C. After about 1.5 h when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 3

Preparation of a modified polyester: The experiment was carried out in a 10L reactor. Terephthalic acid, isophthalic acid, and ethylene glycol were added to the reactor at a molar ratio of terephthalic acid : ethylene glycol : isophthalic acid = 158 : 168 : 15, and then a catalyst, trimellitic acid and sodium 5-sulfonate-isophthalic acid were added. The catalyst was a mixture of antimony trioxide (40 ppm by mass) and a titanate (isopropyl titanate, 200 ppm by mass). The molar ratio value of trimellitic acid was 0.5, and the molar ratio value of sodium 5-sulfonate-isophthalic acid was 2. Replacement with N₂ was performed, and heating under stirring at a gas pressure of 0.1 MPa was conducted. The temperature was controlled at 175°C. After about 1.4 h when water produced by esterification became less significantly, the pressure was released to ambient pressure to complete the esterification reaction. Next, heating and depressurization were performed. The temperature in the reactor was raised to 270°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 4

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 165 : 192 : 11, and then a catalyst, 1,4-cyclohexanedimethanol, neopentyl glycol, trimellitic acid and potassium 5-sulfonate-isophthalic acid were added. The catalyst was antimony acetate (180 ppm by mass). The molar ratio value of 1,4-cyclohexanedimethanol was 1; the molar ratio value of neopentyl glycol was 2.5; the molar ratio value of trimellitic acid was 0.5; and the molar ratio value of potassium 5-sulfonate-isophthalic acid was 1. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 5

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 140 : 190 : 13, and then a catalyst, 1,4-cyclohexanedimethanol, neopentyl glycol, trimellitic acid and sodium 5-sulfonate-isophthalic acid were added. The catalyst was a mixture of antimony trioxide (40 ppm by mass) and a titanate (tetramethyl titanate, 60 ppm by mass). The molar ratio value of 1,4-cyclohexanedimethanol was 0.01; the molar ratio value of neopentyl glycol was 3.5; the molar ratio value of trimellitic acid was 2.8; and the molar ratio value of sodium 5-sulfonate-isophthalic acid was 0.2. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 6

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 150 : 180 : 12, and then a catalyst, 1,4-cyclohexanedimethanol, neopentyl glycol and sodium 5-sulfonate-isophthalic acid were added. The catalyst was a titanate (tetraethyl titanate, 60 ppm by mass). The molar ratio value of 1,4-cyclohexanedimethanol was 3; the molar ratio value of neopentyl glycol was 1.5; and the molar ratio value of sodium 5-sulfonate-isophthalic acid was 0.5. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 7

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 155 : 175 : 13, and then a catalyst, 1,4-cyclohexanedimethanol, neopentyl glycol and sodium 5-sulfonate-isophthalic acid were added. The catalyst was antimony acetate (300 ppm by mass). The molar ratio value of 1,4-cyclohexanedimethanol was 0.05; the molar ratio value of neopentyl glycol was 3.5; and the molar ratio value of sodium 5-sulfonate-isophthalic acid was 3.5. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 8

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 135 : 182 : 15, and then a catalyst, 1,4-cyclohexanedimethanol, neopentyl glycol and sodium 5-sulfonate-isophthalic acid were added. The catalyst was a titanate (tetrabutyl titanate, 200 ppm by mass). The molar ratio value of 1,4-cyclohexanedimethanol was 0.01; the molar ratio value of neopentyl glycol was 0.5; and the molar ratio value of sodium 5-sulfonate-isophthalic acid was 5. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 9

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 148 : 180 : 15, and then a catalyst, 1,4-cyclohexanedimethanol, neopentyl glycol and sodium 5-sulfonate-isophthalic acid were added. The catalyst was antimony trioxide (60 ppm by mass). The molar ratio value of 1,4-cyclohexanedimethanol was 2; the molar ratio value of neopentyl glycol was 2; and the molar ratio value of sodium 5-sulfonate-isophthalic acid was 1. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 10

Preparation of a modified polyester: The experiment was carried out in a 10L reactor. Terephthalic acid, isophthalic acid, and ethylene glycol were added to the reactor according to the molar ratio of terephthalic acid : ethylene glycol : isophthalic acid = 150 : 188 : 12, and then a catalyst, 1,4-cyclohexanedimethanol, neopentyl glycol, trimellitic acid and potassium 5-sulfonate-isophthalic acid were added. The catalyst was poly(antimony ethylene glycoxide) (180 ppm by mass). The molar ratio value of 1,4-cyclohexanedimethanol was 2; the molar ratio value of neopentyl glycol was 2; the molar ratio value of trimellitic acid was 4; and the molar ratio value of potassium 5-sulfonate-isophthalic acid was 0.1. N₂ was used as a protective gas, and stirring and heating were conducted under a gas pressure of 0.1 MPa. The temperature was controlled at 185°C. After about two hours when water produced by esterification became less significantly, the pressure was released to ambient pressure to complete the esterification reaction. Next, heating and depressurization were performed. The temperature in the reactor was raised to 280°C, and the pressure was reduced to 100 Pa to start vacuum polycondensation. The polycondensation continued for 1.8 hours to provide a polyester melt. The polyester melt was cooled in a water tank and pelletized to provide a chemically modified polyester. 1200 ppm by mass of SiO₂ was added to the modified polyester by *in-situ* polymerization.

The preparation method of the modified polyester film and the preparation method of the film-laminated steel are the same as in Application Example 1.

### Example 11

A modified polyester was prepared with reference to the method of Example 1, except that 800 ppm by mass of SiO₂ was added. A modified polyester film and a film-laminated steel were prepared from the modified polyester prepared in Example 11 as described in Example 1.

### Example 12

A modified polyester was prepared with reference to the method of Example 2, except that 2000 ppm by mass of SiO₂ was added. A modified polyester film and a film-laminated steel were prepared from the modified polyester prepared in Example 12 as described in Example 1.

### Effect Example

The film-laminated steels prepared in Examples 1-12 were subjected to a surface tension test.

The standard applied in the surface tension test is: JISK-6763-71. The specific method is as follows: a series of mixed solutions having various surface tension values were formulated. Subsequently, a clean cotton swab was dipped into a mixed solution, and then the cotton swab was used to wipe a surface of a film-laminated steel to form a 6 cm² liquid membrane. If the liquid membrane didn't break for more than 2s, it indicates that the surface tension of the film-laminated steel was greater than that of the mixed solution used. Then, a solution having a higher surface tension was used to continue the test. On the contrary, if the liquid membrane broke, it indicates that the surface tension of the film-laminated steel was less than that of the mixed solution. Then, a mixed solution having a lower surface tension was tried. Such a trial was continued until a critical condition was reached. If a preceding mixed solution having a specific level of surface tension could spread, but a succeeding mixed solution having a higher level of surface tension could not, then the surface tension of the preceding mixed solution was the surface tension of the film-laminated steel.

A bulk modification method was applied to the film for preparing the film-laminated steel according to the present disclosure. In the design of the molecular chain, a fourth component capable of maintaining a long-lasting surface tension was added, so the surface tension of the resulting film-laminated steel didn't degrade as the storage time was prolonged. The surface tension test was performed on Examples 1-12, and the test results were all between 0.045-0.052 N/m (45-52 dynes/cm).

Finally, it should be pointed out that although the present disclosure has been described with reference to the specific examples, those skilled in the art should appreciate that the above examples are only used to illustrate the present disclosure, and are not used to limit the present disclosure.

## Claims

1. A modified polyester, wherein monomers for forming the modified polyester are terephthalic acid, isophthalic acid, ethylene glycol and a fourth component, wherein a molar ratio of terephthalic acid, ethylene glycol, isophthalic acid and the fourth component in the modified polyester is A:B:C:D; wherein A is 135-165, B is 148-194, C is 11-15, and D is 0.01-12; wherein the fourth component is one or more 5-sulfonate-isophthalic acid salts and optionally one or more selected from the group consisting of 1,4-cyclohexanedimethanol, neopentyl glycol and trimellitic acid; and wherein the modified polyester comprises 800-2000 ppm by mass of SiO₂ which is added to the polyester by *in-situ* polymerization, wherein "added by in-situ polymerization" refers to mixing SiO₂ with the monomers for synthesizing the modified polyester, and then polymerizing to produce the modified polyester;
preferably, A is 140-160, B is 160-194, C is 12-15, and D is 3-12, and the modified polyester comprises 1000-1500 ppm by mass of SiO₂; more preferably, the modified polyester comprises 1200 ppm by mass of SiO₂.

2. The modified polyester according to claim 1, wherein the 5-sulfonate-isophthalic acid salt is selected from the group consisting of sodium 5-sulfonate-isophthalic acid, potassium 5-sulfonate-isophthalic acid and lithium 5-sulfonate-isophthalic acid.

3. The modified polyester according to any one of claims 1 to 2, wherein the monomers for forming the modified polyester are terephthalic acid, ethylene glycol, isophthalic acid, a 5-sulfonate-isophthalic acid salt, 1,4-cyclohexanedimethanol, neopentyl glycol and optional trimellitic acid, and wherein the molar ratio of these monomers is (135-165) : (148-194) : (11-15) : (0.01-5) : (0.01-3.5) : (0.5-3.5 ) : (0-4); preferably, the molar ratio of terephthalic acid, ethylene glycol, isophthalic acid, 5-sulfonate-isophthalic acid salt, 1,4-cyclohexanedimethanol, neopentyl glycol and optional trimellitic acid is (135-165) : (160-192) : (11-15) : (0.01-5) : (0.01-3.5) : (1-3.5) : (0-4).

4. A preparation method for the modified polyester according to any one of claims 1-3, wherein the method comprises: feeding terephthalic acid, ethylene glycol, isophthalic acid, a fourth component as raw materials into a reactor according to a feeding molar ratio of terephthalic acid : ethylene glycol : isophthalic acid : the fourth component = (135-165) : (148-194) : (11-15) : (0.01-12), while feeding 800-2000 ppm by mass of SiO₂ at the same time; and allowing them to react in the presence of a catalyst under protection of an inert gas to obtain a polyester melt which is cooled to obtain the modified polyester.

5. The preparation method according to claim 4, wherein the reaction includes copolymerization and vacuum polycondensation, wherein the copolymerization takes place at a reaction temperature of 175-260 °C and continues for 1-3 hours; wherein the pressure in the reactor is released to ambient pressure after the copolymerization, followed by further heating and depressurization, wherein the temperature in the reactor is increased to 240-310 °C and the pressure is reduced to 50-120Pa to start the vacuum polycondensation, wherein the vacuum polycondensation continues for 1.6-2.3 hours.

6. The preparation method according to claim 4 or 5, wherein the catalyst is added in an amount of 60-300 ppm by mass based on the mass of the modified polyester produced, and wherein the catalyst is at least one selected from the group consisting of antimony-based catalysts and titanate-based catalysts, especially wherein the antimony-based catalyst is selected from the group consisting of antimony trioxide, antimony acetate, and poly(antimony ethylene glycoxide), and the titanate catalyst is selected from the group consisting of tetrabutyl titanate, isopropyl titanate, tetramethyl titanate, tetraethyl titanate, and tetrapropyl titanate.

7. A polyester film comprising the modified polyester according to any one of claims 1-3, or prepared from the modified polyester according to any one of claims 1-3 by a biaxial stretching process; preferably, the polyester film has a surface tension of ≥0.045 N/m (45 dynes/cm) measured by the method according to JIS K6763-71, as indicated in the description.

8. The polyester film according to claim 7, wherein the polyester film comprises one or more of a variety of pigments and fillers, and thus has one or more of a variety of colors.

9. A film-laminated steel, wherein the film-laminated steel comprises a steel plate and a polyester film according to any one of claims 7-8 laminated on the steel plate by thermal lamination, especially wherein the steel plate is selected from the group consisting of a chromium-plated steel plate, a tin-plated steel plate, a low-tin steel plate, a galvanized steel plate, a cold-rolled steel plate, and a stainless steel plate.

10. A metal container for medium-end to high-end food or beverage packaging, wherein the metal container is made of the film-laminated steel according to claim 9.

11. A method of preparing a polyester film having a long-lasting high surface tension for food packaging, wherein the method comprises extruding the modified polyester according to any one of claims 1-3 through a twin-screw extruder to obtain a cast sheet; stretching the cast sheet by a biaxial stretching process; heat setting; and cooling to obtain a biaxially stretched polyester film.

12. The method of preparing a polyester film having a long-lasting high surface tension for food packaging according to claim 11, wherein the method comprises the following steps:
(1) Preparation of a chemically modified polyester:
Adding terephthalic acid, isophthalic acid, ethylene glycol, and a fourth component into a reactor at a feeding molar ratio of terephthalic acid : ethylene glycol : isophthalic acid : the fourth component = (135-165) : (148-194) : (11-15) : (0.01-12), with the fourth component being at least one selected from the group consisting of 5-sulfonate-isophthalic acid salt, 1,4-cyclohexanedimethanol, neopentyl glycol, and trimellitic acid; adding a catalyst; heating under stirring with N₂ as a protective gas to a temperature being controlled at 175-260°C to allow for copolymerization for a period of time of 1-3 h; releasing a pressure to ambient pressure; then further heating and depressurizing with the temperature in the reactor being increased to 240-310°C, and the pressure being reduced to 50-100Pa to start vacuum polycondensation; continuing the vacuum polycondensation for a period of time of 1.6-2.3 h to obtain a polyester melt; cooling and pelletizing the polyester melt to obtain a chemically modified polyester, wherein 800-2000 ppm by mass of SiO₂ is added to the chemically modified polyester by *in-situ* polymerization, wherein "added by in-situ polymerization" refers to mixing SiO2 with the monomers for synthesizing the modified polyester, and then polymerizing to produce the modified polyester; and
(2) Film preparation process:
Drying the chemically modified polyester obtained in step (1) on a fluidized bed; extruding the dried chemically modified polyester through a twin-screw extruder to obtain a cast sheet; stretching the cast sheet first longitudinally, then transversely to obtain a film; heat setting the film at a temperature of 150-230°C for a period of time of 6-14 s; and finally cooling and winding the film to obtain a biaxially stretched polyester film.

13. The method of preparing a polyester film having a long-lasting high surface tension for food packaging according to claim 12, wherein the catalyst is at least one selected from the group consisting of antimony trioxide, antimony acetate, poly(antimony ethylene glycoxide), and titanates; preferably, the catalyst is added in an amount of 60-300 ppm by mass, based on an amount of the polyester produced

14. The method of preparing a polyester film having a long-lasting high surface tension according to claim 12 or 13, wherein in the step (2), a temperature of each section of a screw of the twin-screw extruder is 250-270°C; a die temperature is 270-285°C; a rotational speed of the screw of the extruder is 45-50 r/min; and the cast sheet has a thickness of 0.15-0.25 mm.

15. The method of preparing a polyester film having a long-lasting high surface tension according to claim 12 or 13, wherein in step (2), the cast sheet is first stretched longitudinally at a stretching temperature of 70-80°C and a stretching ratio of 3-4, and then stretched transversely, before heat setting, at a stretching temperature of 95-105°C and a stretching ratio of 2.5-3.5.

## Patentansprüche

1. Ein modifizierter Polyester, wobei die Monomere zur Bildung des modifizierten Polyesters Terephthalsäure, Isophthalsäure, Ethylenglykol und eine vierte Komponente sind, wobei das Molverhältnis von Terephthalsäure, Ethylenglykol, Isophthalsäure und der vierten Komponente im modifizierten Polyester A:B:C:D ist; wobei A 135-165, B 148-194, C 11-15 und D 0,01-12 ist; wobei die vierte Komponente ein oder mehrere 5-Sulfonat-Isophthalsäuresalze und optional ein oder mehrere aus der Gruppe bestehend aus 1,4-Cyclohexandimethanol, Neopentylglykol und Trimellitsäure ausgewählt sind; und wobei der modifizierte Polyester 800 bis 2000 ppm, bezogen auf die Masse, SiO₂ umfasst, welches dem Polyester durch *in* situ-Polymerisation zugesetzt wird; wobei "*durch in situ-Polymerisation zugesetzt"* das Mischen von SiO₂ mit den Monomeren zur Synthese des modifizierten Polyesters und das anschließende Polymerisieren zur Herstellung des modifizierten Polyesters bedeutet; vorzugsweise A 140-160, B 160-194, C 12-15 und D 3-12 ist und der modifizierte Polyester 1000-1500 ppm SiO₂ umfasst; noch bevorzugter umfasst der modifizierte Polyester 1200 ppm SiO₂.

2. Der modifizierte Polyester nach Anspruch 1, wobei das 5-Sulfonat-Isophthalsäuresalz aus der Gruppe, bestehend aus Natrium-5-sulfonat-isophthalsäure, Kalium-5-sulfonat-isophthalsäure und Lithium-5-sulfonat-isophthalsäure, ausgewählt ist.

3. Der modifizierte Polyester nach einem der Ansprüche 1 bis 2, wobei die Monomere zur Bildung des modifizierten Polyesters Terephthalsäure, Ethylenglykol, Isophthalsäure, ein 5-Sulfonat-Isophthalsäuresalz, 1,4-Cyclohexandimethanol, Neopentylglykol und gegebenenfalls Trimellitsäure sind, und wobei das Molverhältnis dieser Monomere (135-165) : (148-194) : (11-15) : (0,01-5) : (0,01-3,5) : (0,5-3,5) : (0-4) beträgt; vorzugsweise beträgt das Molverhältnis von Terephthalsäure, Ethylenglykol, Isophthalsäure, 5-Sulfonat-Isophthalsäuresalz, 1,4-Cyclohexandimethanol, Neopentylglykol und optional Trimellitsäure (135-165) : (160-192) : (11-15) : (0,01-5) : (0,01-3,5) : (1-3,5) : (0-4).

4. Ein Verfahren zur Herstellung des modifizierten Polyesters nach einem der Ansprüche 1 bis 3, wobei das Verfahren umfasst: Zuführen von Terephthalsäure, Ethylenglykol, Isophthalsäure und einer vierten Komponente als Rohstoffe in einen Reaktor gemäß einem Zuführ-Molverhältnis von Terephthalsäure : Ethylenglykol : Isophthalsäure : vierte Komponente = (135-165) : (148-194) : (11-15) : (0,01-12) in einen Reaktor, während gleichzeitig 800-2000 ppm, bezogen auf die Masse, SiO₂ zugeführt werden; und Reagierenlassen unter Schutz eines Inertgases in Gegenwart eines Katalysators, um eine Polyesterschmelze zu erhalten, welche abgekühlt wird, um den modifizierten Polyester zu erhalten.

5. Das Herstellungsverfahren nach Anspruch 4, wobei die Reaktion eine Copolymerisation und eine Vakuumpolykondensation umfasst, wobei die Copolymerisation bei einer Reaktionstemperatur von 175-260 °C stattfindet und 1-3 Stunden dauert; wobei der Druck im Reaktor nach der Copolymerisation auf Umgebungsdruck abgelassen wird, gefolgt von weiterer Erwärmung und Druckentlastung, wobei die Temperatur im Reaktor auf 240-310 °C erhöht und der Druck auf 50-120 Pa reduziert wird, um die Vakuumpolykondensation zu starten, wobei die Vakuumpolykondensation 1,6-2,3 Stunden lang fortgesetzt wird.

6. Das Herstellungsverfahren nach Anspruch 4 oder 5, wobei der Katalysator in einer Menge von 60-300 ppm, bezogen auf die Masse des hergestellten modifizierten Polyesters, zugegeben wird und wobei der Katalysator mindestens einer aus der Gruppe bestehend aus Antimon-basierten Katalysatoren und Titanat-basierten Katalysatoren ist, insbesondere wobei der Antimon-basierte Katalysator aus der Gruppe bestehend aus Antimontrioxid, Antimonacetat und Poly(antimonethylenglycoxid) ausgewählt ist und der Titanatkatalysator aus der Gruppe, bestehend aus Tetrabutyl-Titanat, Isopropyl-Titanat, Tetramethyl-Titanat, Tetraethyl-Titanat und Tetrapropyl-Titanat ausgewählt ist.

7. Eine Polyesterfolie, umfassend den modifizierten Polyester nach einem der Ansprüche 1 bis 3, oder hergestellt aus dem modifizierten Polyester nach einem der Ansprüche 1 bis 3 durch ein biaxiales Streckverfahren; vorzugsweise weist die Polyesterfolie eine Oberflächenspannung von ≥ 0,045 N/m (45 Dyn/cm) auf, gemessen nach dem Verfahren gemäß JIS K6763-71, wie in der Beschreibung angegeben.

8. Die Polyesterfolie nach Anspruch 7, wobei die Polyesterfolie ein oder mehrere einer Mehrzahl von Pigmenten und Füllstoffen umfasst und somit eine oder mehrere einer Mehrzahl von Farben aufweist.

9. Ein filmbeschichteter Stahl, wobei der filmbeschichtete Stahl eine Stahlplatte und eine Polyesterfolie nach einem der Ansprüche 7-8 umfasst, welcher durch thermische Laminierung auf die Stahlplatte laminiert ist, insbesondere wobei die Stahlplatte aus der Gruppe, bestehend aus einer verchromten Stahlplatte, einer verzinnten Stahlplatte, einer Stahlplatte mit niedrigem Zinnanteil, einer verzinkten Stahlplatte, einer kaltgewalzten Stahlplatte und einer Edelstahlplatte, ausgewählt ist.

10. Ein Metallbehälter für mittel- bis hochwertige Lebensmittel- oder Getränkeverpackungen, wobei der Metallbehälter aus dem filmbeschichteten Stahl nach Anspruch 9 hergestellt ist.

11. Ein Verfahren zur Herstellung einer Polyesterfolie mit einer lang anhaltenden hohen Oberflächenspannung für Lebensmittelverpackungen, wobei das Verfahren umfasst: Extrudieren des modifizierten Polyesters nach einem der Ansprüche 1 bis 3 durch einen Doppelschneckenextruder, um eine gegossene Folie zu erhalten; Strecken der gegossenen Folie durch ein biaxiales Streckverfahren; Wärmefixieren; und Abkühlen, um eine biaxial gestreckte Polyesterfolie zu erhalten.

12. Das Verfahren zur Herstellung einer Polyesterfolie mit einer lang anhaltenden hohen Oberflächenspannung für Lebensmittelverpackungen nach Anspruch 11, wobei das Verfahren die folgenden Schritte umfasst:
(1) Herstellung eines chemisch modifizierten Polyesters:
Zugeben von Terephthalsäure, Isophthalsäure, Ethylenglykol und einer vierten Komponente in einen Reaktor in einem Zuführ-Molverhältnis von Terephthalsäure : Ethylenglykol : Isophthalsäure : der vierten Komponente = (135-165) : (148-194) : (11-15) : (0,01-12), wobei die vierte Komponente mindestens eine aus der Gruppe bestehend aus 5-Sulfonat-Isophthalsäuresalz, 1,4-Cyclohexandimethanol, Neopentylglykol und Trimellitsäure ist; Zugeben eines Katalysators; Erwärmen unter Rühren mit N₂ als Schutzgas auf eine Temperatur, welche auf 175-260 °C geregelt wird, um eine Copolymerisation über einen Zeitraum von 1-3 Stunden zu ermöglichen; Ablassen des Drucks auf Umgebungsdruck; anschließendes weiteres Erwärmen und Druckentlasten, wobei die Temperatur im Reaktor auf 240-310 °C erhöht und der Druck auf 50-100 Pa reduziert wird, um die Vakuumpolykondensation zu starten; Fortsetzen der Vakuumpolykondensation für einen Zeitraum von 1,6-2,3 Stunden, um eine Polyesterschmelze zu erhalten; Kühlen und Pelletieren der Polyesterschmelze, um einen chemisch modifizierten Polyester zu erhalten, wobei 800-2000 ppm SiO₂ durch in-situ-Polymerisation zu dem chemisch modifizierten Polyester hinzugefügt werden, wobei "*durch in-situ-Polymerisation hinzugefügt*" das Mischen von SiO₂ mit den Monomeren zur Synthese des modifizierten Polyesters und anschließende Polymerisation zur Herstellung des modifizierten Polyesters bedeutet; und
(2) Verfahren zur Herstellung der Folie:
Trocknen des in Schritt (1) erhaltenen chemisch modifizierten Polyesters auf einem Fließbett; Extrudieren des getrockneten chemisch modifizierten Polyesters durch einen Doppelschneckenextruder, um eine gegossene Folie zu erhalten; Strecken der gegossenen Folie zunächst in Längsrichtung, dann in Querrichtung, um eine Folie zu erhalten; Wärmefixieren der Folie bei einer Temperatur von 150-230 °C für einen Zeitraum von 6-14 s; und schließlich Abkühlen und Aufwickeln der Folie, um eine biaxial verstreckte Polyesterfolie zu erhalten.

13. Das Verfahren zur Herstellung einer Polyesterfolie mit einer lang anhaltenden hohen Oberflächenspannung für Lebensmittelverpackungen nach Anspruch 12, wobei der Katalysator mindestens einer aus der Gruppe bestehend aus Antimontrioxid, Antimonacetat, Poly(antimonethylenglycoxid) und Titanaten ist; vorzugsweise wird der Katalysator in einer Menge von 60-300 ppm, bezogen auf die Menge des hergestellten Polyesters, zugesetzt.

14. Das Verfahren zur Herstellung einer Polyesterfolie mit einer lang anhaltenden hohen Oberflächenspannung nach Anspruch 12 oder 13, wobei in Schritt (2) die Temperatur jedes Abschnitts einer Schnecke des Doppelschneckenextruders 250-270 °C beträgt; die Düsentemperatur 270-285 °C beträgt; die Drehzahl der Schnecke des Extruders 45-50 U/min beträgt; und die gegossene Folie eine Dicke von 0,15-0,25 mm aufweist.

15. Das Verfahren zur Herstellung einer Polyesterfolie mit einer lang anhaltenden hohen Oberflächenspannung nach Anspruch 12 oder 13, wobei in Schritt (2) die gegossene Folie zunächst in Längsrichtung bei einer Strecktemperatur von 70-80 °C und einem Streckverhältnis von 3-4 gestreckt und anschließend vor dem Thermofixieren in Querrichtung bei einer Strecktemperatur von 95-105 °C und einem Streckverhältnis von 2,5-3,5 gestreckt wird.

## Revendications

1. Un polyester modifié, dans lequel les monomères utilisés pour former le polyester modifié sont l'acide téréphtalique, l'acide isophtalique, l'éthylène glycol et un quatrième composant, dans lequel le rapport molaire entre l'acide téréphtalique, l'éthylène glycol, l'acide isophtalique et le quatrième composant dans le polyester modifié est A:B:C:D ; où A est 135-165, B est 148-194, C est 11-15, et D est 0,01-12 ; dans lequel le quatrième composant est un ou plusieurs sels d'acide 5-sulfonate-isophtalique et éventuellement un ou plusieurs choisis dans le groupe constitué par le 1,4-cyclohexanediméthanol, du néopentylglycol et de l'acide trimellitique ; et dans lequel le polyester modifié comprend 800-2000 ppm en masse de SiO₂ qui est ajouté au polyester par polymérisation *in situ ;* dans lequel « ajouté par polymérisation in situ » fait référence au mélange de SiO₂ avec les monomères pour synthétiser le polyester modifié, puis à la polymérisation pour produire le polyester modifié ; de préférence, A vaut 140-160, B vaut 160-194, C vaut 12-15 et D vaut 3-12, et le polyester modifié comprend 1000-1500 ppm en masse de SiO₂ ; de manière plus préférentielle, le polyester modifié comprend 1200 ppm en masse de SiO₂.

2. Le polyester modifié selon la revendication 1, dans lequel le sel d'acide 5-sulfonate-isophtalique est choisi parmi le groupe constitué de l'acide 5-sulfonate-isophtalique de sodium, de l'acide 5-sulfonate-isophtalique de potassium et de l'acide 5-sulfonate-isophtalique de lithium.

3. Le polyester modifié selon l'une des revendications 1 à 2, dans lequel les monomères pour former le polyester modifié sont l'acide téréphtalique, l'éthylène glycol, l' acide isophtalique, un sel d'acide 5-sulfonate-isophtalique, du 1,4-cyclohexanediméthanol, du néopentylglycol et éventuellement de l'acide trimellitique, et dans lequel le rapport molaire de ces monomères est de (135-165) : (148-194) : (11-15) : (0,01-5) : (0,01-3,5) : (0,5-3,5) : (0-4) ; de préférence, le rapport molaire entre l'acide téréphtalique, l'éthylène glycol, l'acide isophtalique, le sel d'acide 5-sulfonate-isophtalique, le 1,4-cyclohexanediméthanol, le néopentylglycol et, éventuellement, l'acide trimellitique est de (135-165) : (160-192) : (11-15) : (0,01-5) : (0,01-3,5) : (1-3,5) : (0-4).

4. Un procédé de préparation du polyester modifié selon l'une des revendications 1 à 3, dans lequel le procédé comprend : l'introduction d'acide téréphtalique, d'éthylène glycol, d'acide isophtalique, d'un quatrième composant en tant que matières premières dans un réacteur selon un rapport molaire d'alimentation de l'acide téréphtalique : éthylène glycol : acide isophtalique : quatrième composant = (135-165) : (148-194) : (11-15) : (0,01-12), tout en introduisant simultanément 800-2000 ppm en masse de SiO₂ ; et on les laisse réagir en présence d'un catalyseur sous protection d'un gaz inerte pour obtenir un polyester fondu qui est refroidi pour obtenir le polyester modifié.

5. Le procédé de préparation selon la revendication 4, dans lequel la réaction comprend une copolymérisation et une polycondensation sous vide, dans lequel la copolymérisation a lieu à une température de réaction de 175-260 °C et se poursuit pendant 1-3 heures ; dans lequel la pression dans le réacteur est ramenée à la pression ambiante après la copolymérisation, puis suivie d'un chauffage supplémentaire et d'une dépressurisation, dans lequel la température dans le réacteur est augmentée à 240-310 °C et la pression est réduite à 50-120 Pa pour démarrer la polycondensation sous vide, dans lequel la polycondensation sous vide se poursuit pendant 1,6-2,3 heures.

6. Le procédé de préparation selon la revendication 4 ou 5, dans lequel le catalyseur est ajouté en une quantité de 60-300 ppm en masse par rapport à la masse du polyester modifié produit, et dans lequel le catalyseur est au moins un catalyseur choisi dans le groupe constitué par les catalyseurs à base d'antimoine et les catalyseurs à base de titanate, en particulier dans lequel le catalyseur à base d'antimoine est choisi dans le groupe constitué par le trioxyde d'antimoine, l'acétate d'antimoine et le poly(éthylène glycolate d'antimoine), et le catalyseur à base de titanate est choisi dans le groupe constitué par le titanate de tétrabutyle, le titanate d'isopropyle, le titanate de tétraméthyle, le titanate de tétraéthyle et le titanate de tétrapropyle.

7. Un film polyester comprenant le polyester modifié selon l'une des revendications 1 à 3, ou préparé à partir du polyester modifié selon l'une des revendications 1 à 3 par un procédé d'étirage biaxial ; de préférence, le film polyester a une tension superficielle ≥ 0,045 N/m (45 dynes/cm) mesurée par la méthode selon JIS K6763-71, comme indiqué dans la description.

8. Le film polyester selon la revendication 7, dans lequel le film polyester comprend un ou plusieurs pigments et charges parmi une variété, et présente ainsi une ou plusieurs couleurs parmi une variété.

9. Un acier laminé avec film, dans lequel l'acier laminé avec film comprend une plaque d'acier et un film polyester selon l'une des revendications 7 à 8 laminé sur la plaque d'acier par laminage thermique, en particulier dans lequel la plaque d'acier est choisie parmi le groupe constitué d'une plaque d'acier chromée, d'une plaque d'acier étamée, d'une plaque d'acier à faible teneur en étain, d'une plaque d'acier galvanisée, d'une plaque d'acier laminée à froid et d'une plaque d'acier inoxydable.

10. Un récipient métallique destiné à l'emballage de produits alimentaires ou de boissons de gamme moyenne à haute, dans lequel le récipient métallique est fabriqué à partir d'acier laminé avec un film conformément à la revendication 9.

11. Un procédé de préparation d'un film polyester présentant une tension superficielle élevée durable pour l'emballage alimentaire, dans lequel le procédé comprend l'extrusion du polyester modifié selon l'une des revendications 1 à 3 à l'aide d'une extrudeuse à double vis afin d'obtenir une feuille moulée ; l'étirage de la feuille moulée par un procédé d'étirage biaxial ; thermofixation ; et le refroidissement afin d'obtenir un film polyester étiré biaxialement.

12. Un procédé de préparation d'un film polyester présentant une tension superficielle élevée durable pour l'emballage alimentaire selon la revendication 11, dans lequel le procédé comprend les étapes suivantes :
(1) Préparation d'un polyester chimiquement modifié :
Ajouter d'acide téréphtalique, d'acide isophtalique, d'éthylène glycol et d'un quatrième composant dans un réacteur à un rapport molaire d'alimentation de l'acide téréphtalique : éthylène glycol : acide isophtalique : quatrième composant = (135-165) : (148-194) : (11-15) : (0,01-12), le quatrième composant étant au moins un élément choisi dans le groupe constitué par le sel d'acide 5-sulfonate-isophtalique, le 1,4-cyclohexanediméthanol, le néopentylglycol et l'acide trimellitique ; ajouter un catalyseur ; chauffer sous agitation avec du N₂ comme gaz protecteur à une température contrôlée 175-260 °C pour permettre la copolymérisation pendant une période de 1-3 heures ; relâcher la pression jusqu'à la pression ambiante ; puis chauffage supplémentaire et dépressurisation avec augmentation de la température dans le réacteur à 240-310 °C et réduction de la pression à 50-100 Pa pour démarrer la polycondensation sous vide ; poursuite de la polycondensation sous vide pendant une durée de 1,6-2,3 heures pour obtenir un polyester fondu ; refroidir et granuler le polyester fondu pour obtenir un polyester chimiquement modifié, dans lequel 800-2000 ppm en masse de SiO₂ sont ajoutées au polyester chimiquement modifié par polymérisation *in situ,* où « ajoutées par polymérisation *in situ »* signifie mélanger le SiO₂ avec les monomères pour synthétiser le polyester modifié, puis polymériser pour produire le polyester modifié ; et
(2) Procédé de préparation du film :
sécher le polyester chimiquement modifié obtenu à l'étape (1) sur un lit fluidisé ; extruder le polyester chimiquement modifié séché à travers une extrudeuse à double vis pour obtenir une feuille moulée ; étirer la feuille moulée d'abord longitudinalement, puis transversalement pour obtenir un film ; thermofixation du film à une température de 150-230 °C pendant une durée de 6-14 s ; et enfin refroidissement et enroulement du film pour obtenir un film polyester étiré biaxialement.

13. Le procédé de préparation d'un film polyester présentant une tension superficielle élevée durable pour l'emballage alimentaire selon la revendication 12, dans lequel le catalyseur est au moins un élément choisi parmi le groupe comprenant le trioxyde d'antimoine, l'acétate d'antimoine, le poly(éthylène glycolate d'antimoine) et les titanates ; de préférence, le catalyseur est ajouté en une quantité de 60-300 ppm en masse, sur la base d'une quantité de polyester produit.

14. Le procédé de préparation d'un film polyester présentant une tension superficielle élevée durable selon la revendication 12 ou 13, dans lequel, dans l'étape (2), la température de chaque section d'une vis de l'extrudeuse à double vis est 250-270 °C ; la température de la filière est 270-285 °C ; la vitesse de rotation de la vis de l'extrudeuse est 45-50 tr/min ; et la feuille moulée a une épaisseur de 0,15-0,25 mm.

15. Le procédé de préparation d'un film polyester présentant une tension superficielle élevée durable selon la revendication 12 ou 13, dans lequel, à l'étape (2), la feuille moulée est d'abord étirée longitudinalement à une température d'étirage de 70-80 °C et avec un rapport d'étirage de 3-4, puis étirée transversalement, avant thermofixation, à une température d'étirage de 95-105 °C et avec un rapport d'étirage de 2,5-3,5.
